# EUROPEAN PATENT SPECIFICATION

(11) **EP 0 806 090 B1**
(45) Date of publication and mention of the grant of the patent: **18.11.1998**
(21) Application number: 95930777.8
(22) Date of filing: 01.09.1995
(51) Int. Cl.: H04B 1/59, G01S 13/75, G01V 3/08, G07C 11/00

(54) **LABEL FOR MARKING AND REMOTE SENSING OF OBJECTS**
ETIKETT ZUM KENNZEICHNEN UND FERNNACHWEIS VON GEGENSTÄNDEN
ETIQUETTE DE MARQUAGE ET TELEDETECTION D'OBJETS

(30) Priority: 02.09.1994 SE 9402943
(43) Date of publication of application: 12.11.1997
(73) Proprietor: RSO CORPORATION N.V., Curaçao (AN)
(72) Inventor: TYRéN, Carl, F-06600 Antibes (FR); CLARK, Arthur, E., Adelphi, MD 20783 (US)
(74) Representative: Ström, Tore
(86) International application number: SE9500982
(87) International publication number: WO9608087

(56) References cited:
- EP-A- 0 338 696
- WO-A-93/14474
- WO-A-93/14478

## Description

The present invention relates to a label for marking and remote sensing of objects, said label comprising at least one elongated strip or tape made from a magnetoelastical material with a high magnetomechanical coupling, the strip being movably arranged within a cavity of the label.

Labels of the kind mentioned above are known from e.g. WO 88/01427, EP-B-0 096 182, and WO 93/14478; According to these publications the labels are provided with an internal cavity, in which at least one strip of an amorphous magnetoelastical material is arranged. The strip material has a high magnetomechanical coupling, i.e. a mechanical load on the strip also causes a change in the magnetic properties of the strip. The strip constitutes a kind of a mechanical resonance element with a resonance frequency in a certain frequency band. If more than one strip is provided, the frequency bands are normally displaced in relation to each other. According to a coding method the angles between the amorphous elements of the label are used to define the code position. Consequently, each element may be arranged to represent any desired code value within a predetermined number range.

Label detection is carried out by exposing the strips to a magnetic interference signal, which forces the strips into a state of mechanical self-oscillation. By means of a magnetic detection coil the strip resonance may be detected. The strip resonance frequency is strongly influenced by a surrounding magnetic field, and hence a control field is used so as to vary the magnetic field in an interrogation zone, thereby making it possible to simultaneously detect identical strips, that are exposed to a magnetic field of different strength or direction.

According to the Swedish patent application No. 9401436-2 from present applicant, which has not yet been published, it is suggested to use geometrically identical strips, i.e. strips with the same length, width, and thickness which are exposed to an influence for changing the strip mass, while preserving the magnetic properties of the strip. For example, the strips are provided at their respective ends with elements - weights - changing the strip mass.

It is a common fact for all the applications mentioned above that the strips must be arranged in a label cavity, so that the strips may vibrate freely without contacting the walls of the cavity. Furthermore, they must be well protected against mechanical influence in the cavity.

Since the strips being used are made from a thin amorphous magnetoelastical foil, the thickness of which is in the order of 25 µm, it is realized that the strips may be exposed to a bending force caused by influence from the gravity alone. If, in addition, the strips are provided with weights at their respective ends, the bending may become relatively large. Because of the risk of such a bending, the element cavity, in which the strip or the strips are to be arranged, has been dimensioned with a sufficient depth in order to prevent the strips from contacting the cavity walls, should such a bending occur. Obviously, this has influenced the label thickness undesirably.

As previously mentioned, to detect the label, the strips are forced into a state of self-oscillation in the strip length direction, the strip resonance being detected by means of a magnetic-detection coil. In order to obtain a satisfactory detection result the straightness of the strips is important. If the strips are curved, there is a risk for loosing energy. A transition of the supplied energy to a bending mode of oscillation occurs, and the detection result is severely impaired.

It is an object of the present invention by an appropriate design of the amorphous magneto-elastical strips contained in the label to provide the strips with a bending stiffness sufficient enough to prevent a harmful bending of the strips due to influences from forces in the detection zone, at the same time avoiding a harmful frictional influence caused by a strip contacting the cavity walls, e.g. static electricity. It is another object of the invention to facilitate a reduced label thickness in comparison with previously known labels of this kind, by appropriately designing said strips.

The objects set out above are achieved by designing the label according to the features of the appended patent claims.

The invention will be described below with reference to the embodiments shown on the accompanying drawings.

FIG. 1 is an enlarged perspective view of a transducer element used in the label according to the invention.

FIG. 2 is a cross-sectional view according to arrows A-A in FIG. 1.

FIG. 3 is an enlarged perspective view of an embodiment of a transducer element used in the label.

FIG. 4 is a cross-sectional view according to arrows B-B in FIG. 3.

FIG. 5 is a sectional view of a label according to the invention, where only one transducer element is arranged in the label cavity.

FIG. 6 is a sectional view of an embodiment of the label according to the invention, where several transducer elements are arranged in the label cavity.

FIG. 7 is yet another embodiment of the label according to the invention.

FIG. 8 is a horizontal sectional view of the labels according to FIGS. 5-8.

FIG. 9 is an alternative embodiment of the label shown in FIG. 5, where the transducer element is supported at its ends rather than at its center.

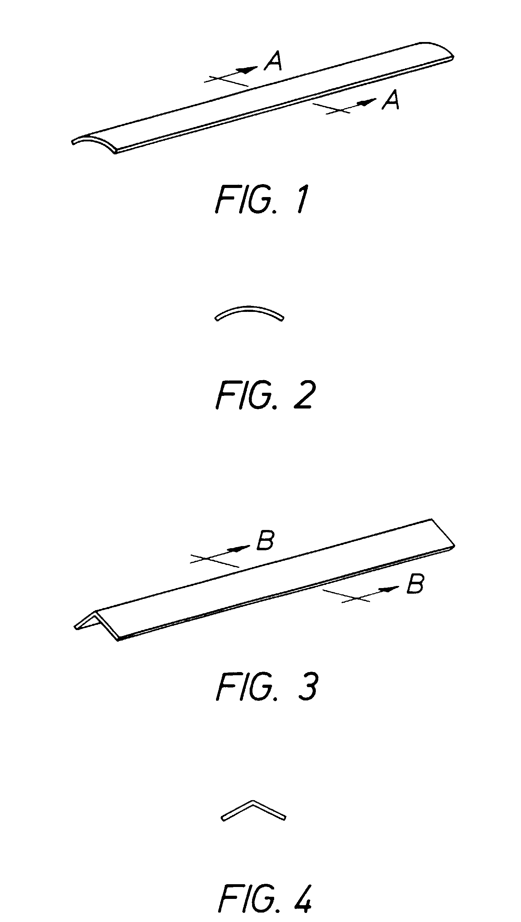

FIGS. 1-4 show examples of transducer elements for use in the label according to the invention. An element 1 of FIG. 1 consists of a thin strip of an amorphous magneto-elastical material. The strip has a length of about 5 cm, a width of about 1 or 2 mm, and a thickness of about 25 µm. Particularly from FIG. 2 it appears that the strip has a curved cross-section with an arched shape, which provides the strip with an increased bending stiffness as well as an increased torsional stiffness. By the increased bending stiffness the strip maintains its straightness within the label, despite the loads normally exerted on the label in the detection zone.

In the embodiment shown in FIG. 3 and 4 the strip has an angular cross-section rather than an arched one. This cross-sectional shape also provides the strip with an increased bending stiffness, which enables the strip to maintain its straightness, even if the thickness of the strip material is small.

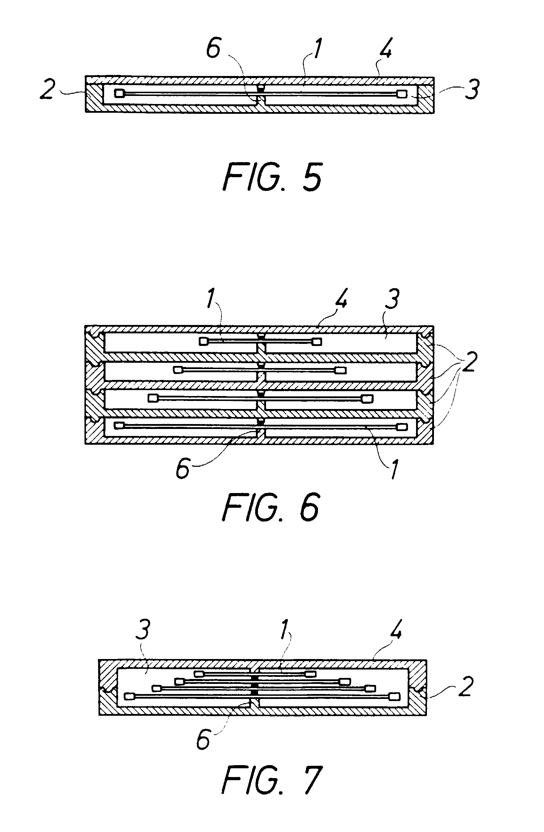

In FIG. 5 an embodiment of a label according to the invention is shown, comprising a transducer element 1 arranged in a label cavity. The label comprises a cassette-type socket 2 made from a stiff material, which has a high resistance against external influence and which is nonmagnetic and electrically non-conductive or only electrically conductive to a minor extent. Preferably the cassette 2 is formed by a stiff plastic material. The cassette 2 is provided with an internal cavity 3 for storing of least one transducer element 1 of the kind shown in FIGS. 1-4. In the embodiment according to FIG. 5 the label only comprises one transducer element 1 constituted by an elongated strip of an amorphous magnetic elastical material, which for instance is formed as shown in FIGS. 1 och 3. In this case the strip 1 is provided with small weights at its ends, the purpose of which is to change the element mass. The strip 1 is supported at its center by a pin 6 protruding from the bottom of the cassette 2, and the strip is fixed to the pin 6 by for instance gluing or form dependent engagement, or in any other suitable way. Thus, the strip 1 protrudes from the pin 6 in both directions while maintaining its straightness as well as the ability to freely oscillate in the longitudinal direction. By its bending stiffness the strip 1 is prevented from bending due to influence from forces normally existing in the detection zone to such an extent, that the strip contacts the bottom of the cassette 2 or a lid 4 closing the cassette 2. After the strip has been installed in the cassette 2 and the lid 4 has been attached, the label is ready to be used.

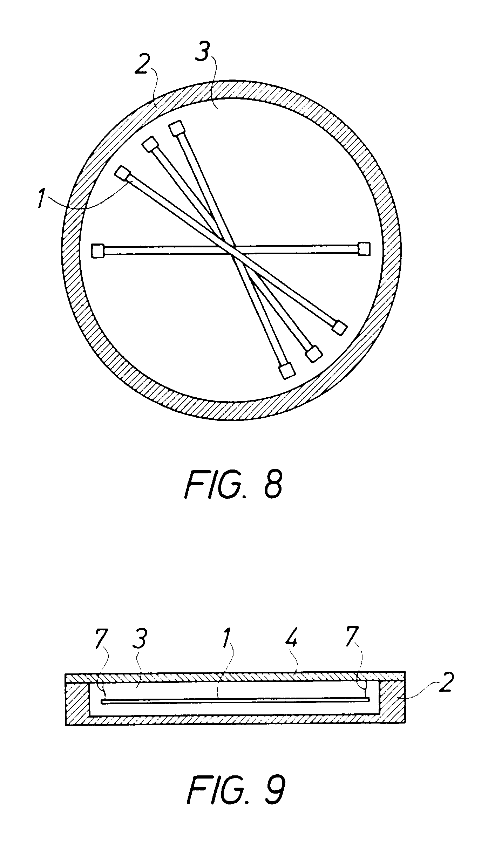

In FIG. 6 a label according to the invention is illustrated as being provided with four transducer elements 1. According to this embodiment each transducer element 1, i.e. each strip 1, is arranged in a separate cassette 2, each of the respective cassettes substantially corresponding to the cassette 2 described in conjunction with FIG. 5. These cassettes or sub-cassettes 2 are arranged on top of each other in a pile, and the uppermost sub-cassette is sealed or closed by a lid 4. A horizontal sectional view of the label is shown in FIG. 8, from which it appears that the strips 1 are angularly displaced with respect to each other in predetermined angles between the strips 1. The embodiment according to FIG. 6 thus provides particular advantages with respect to the angular setting of the strips 1. Each strip 1 is mounted in advance in its respective sub-cassette 2, the sub-cassettes then being piled upon each other. The angular setting may then be carried out by turning the sub-cassettes 2 in predetermined angles with respect to each other, then attaching the lid 4, and fixing the sub-cassettes and the lid with respect to each other. For clarity reasons the label according to FIG. 6 is out of clarity reasons shown in an excessive scale and therefore seems to be have a substantial height, but the label has in fact quite moderate height dimensions. With a strip length of about 4 cm the label diameter becomes approximately 5 cm, and the total height should in practice turn out to be about 3-4 mm.

In FIG. 7 there is shown a label according to the invention, the height dimensions of which being even smaller. This is accomplished by attaching the strips 1 directly on top of each other with a spacing means in the bearing points. However, for such an embodiment it is necessary to carry out the angular setting of the strips 1 already when the strips are mounted in the cavity 3 of the cassette 2. After the directions of the strips 1 have been set, the lid 4 is attached and the label is closed.

In the embodiments described above of the label according to the invention the strips 1 are centrally supported in the label cavity 3. However, this need not be the case in all applications of the invention. An alternative embodiment is shown in FIG. 9, according to which the strips 1 are suspended with thin wires or springs 7 in the respective ends. The suspension of the strips 1 with thin wires or springs obviously must be carried out in such a way that the longitudinal oscillations of the strips 1 are not prevented. Thanks to the bending stiffness of the strips the strips 1 are extending along a straight line between the suspension points.

The invention has been described above with reference to some examples, but the invention is not limited to those embodiments and may be varied within the scope of the appended patent claims.

## Claims

1. Label for marking and remote sensing of objects, comprising a cassette-type socket (2) made from a non-magnetical and electrically non-conductive material with a strong resistance against external influences and provided with a cavity formed in the interior of the cassette, at least one elongated strip of a magnetoelastical material with a high magnetomechanical coupling being movably arranged within said cavity, **characterized** in that said at least one elongated strip is a thin foil strip (1) of an amorphous magnetoelastical material and is movably arranged in said cavity (3), said strip (1) having a rectilinear extension and a cross-sectional shape deviating from a planar cross-sectional shape, the strip (1) thereby maintaining its straightness despite the influence from forces normally exerted upon the label in the detection zone.

2. Label according to claim 1,
**characterized** in that each strip is supported at the center of the strip in said cassette cavity.

3. Label according to claim 2,
**characterized** in that the label is composed of a number of sub-cassettes (2) arranged upon each other in a' pile, one strip (1) being mounted in each respective sub-cassette (2).

4. Label according to claim 2,
**characterized** in that a number of strips (1) are arranged in the same cavity in said cassette with angular displacements and with a spacing means in the bearing points between adjacent strips.

5. Label according to claim 1,
**characterized** in that each strip (1) is suspended at its respective ends by means of at least one thin wire or spring.

6. Label according to any preceding claim,
**characterized** in that each strip (1) has a cross-sectional shape with such a bending resistance, that the strip maintains its rectilinear length extension thanks to its bending stiffness resulting from said bending resistance, despite the influence from forces acting upon the strip in the detection zone.

## Patentansprüche

1. Etikett zum Markieren und Fernerfassen von Objekten, mit einer Kassettentyp-Hülle (2), die aus einem unmagnetischen und elektrisch nichtleitenden Material mit großer Widerstandsfähigkeit gegen externe Einflüsse hergestellt ist und mit einem im Inneren der Kassette ausgebildeten Hohlraum versehen ist, und wenigstens einem langgestreckten Streifen aus einem magnetoelastischen Material mit hoher magnetomechanischer Kopplung, der beweglich innerhalb des Hohlraums angeordnet ist, **dadurch gekennzeichnet,** daß der wenigstens eine langgestreckte Streifen ein dünner Folienstreifen (1) aus einem amorphen megnetoelastischen Material ist und beweglich im Hohlraum (3) angeordnet ist, wobei der Streifen (1) eine geradlinige Ausdehnung und eine Querschnittsform besitzt, die von einer ebenen Querschnittsform abweicht, und wobei der Streifen (1) somit seine Geradheit trotz des Einflusses von Kräften beibehält, die normalerweise in der Erfassungszone auf das Etikett ausgeübt werden.

2. Etikett nach Anspruch 1,
**dadurch gekennzeichnet,** daß jeder Streifen in der Mitte des Streifens im Kassettenhohlraum unterstützt ist.

3. Etikett nach Anspruch 2,
**dadurch gekennzeichnet,** daß das Etikett aus mehreren Unterkassetten (2) besteht, die in einem Stapel übereinander angeordnet sind, wobei in jeder entsprechenden Unterkassette (2) ein Streifen (1) montiert ist.

4. Etikett nach Anspruch 2,
**dadurch gekennzeichnet,** daß mehrere Streifen (1) im gleichen Hohlraum in der Kassette mit Winkelverschiebungen und mit einer Abstandseinrichtung in den Lagerpunkten zwischen benachbarten Streifen angeordnet sind.

5. Etikett nach Anspruch 1,
**dadurch gekennzeichnet,** daß jeder Streifen (1) an seinen jeweiligen Enden mittels wenigstens eines dünnen Drahtes oder einer Feder aufgehängt ist.

6. Etikett nach irgendeinem der vorangehenden Ansprüche,
**dadurch gekennzeichnet,** daß jeder Streifen (1) eine Querschnittsform mit einer solchen Biegefestigkeit besitzt, daß die Streifen ihre geradlinige Längsausdehnung dank ihrer Biegesteifigkeit, die aus der Biegewiderstandsfähigkeit resultiert, trotz des Einflusses von Kräften beibehalten, die in der Erfassungszone auf den Streifen einwirken.

## Revendications

1. Etiquette de marquage et de télédétection d'objets comprenant une douille (2) de type cassette réalisée en un matériau non magnétique et non conducteur de l'électricité, ayant une forte résistance contre les influences externes et pourvue d'une cavité formée à l'intérieur de la cassette, au moins une bande allongée de matériau magnéto-élastique ayant un couplage magnéto-mécanique élevé, étant logée de façon déplaçable dans ladite cavité, caractérisée en ce que ladite au moins une bande allongée est une mince bande en feuille (1) en matériau magnéto-élastique amorphe et est disposée de manière déplaçable dans ladite cavité (3), ladite bande (1) ayant un déploiement rectiligne et une forme de section transversale dérivée d'une forme de section transversale planaire, la bande (1) maintenant de ce fait sa rectitude en dépit de l'influence des forces normalement exercées sur l'étiquette dans la zone de détection.

2. Etiquette selon la revendication 1, caractérisée en ce que chaque bande est supportée au centre de la bande dans ladite cavité de cassette.

3. Etiquette selon la revendication 2, caractérisée en ce que l'étiquette est constituée d'un certain nombre de sous-cassettes (2) disposées les unes au-dessus des autres dans une pile, une bande (1) étant montée dans chaque sous-cassette (2) respective.

4. Etiquette selon la revendication 2, caractérisée en ce qu'un certain nombre de bandes (1) est agencé dans la même cavité ménagée dans ladite cassette, selon des déplacements angulaires et un moyen d'espacement dans les points porteurs entre les bandes adjacentes.

5. Etiquette selon la revendication 1, caractérisée en ce que chaque bande (1) est suspendue au niveau de ses extrémités respectives, au moyen d'au moins un mince fil ou ressort.

6. Etiquette selon l'une quelconque des revendications précédentes, caractérisée en ce que chaque bande (1) présente une forme de section transversale ayant un telle résistance en fléchissement que la bande maintient son déploiement en longueur rectiligne, grâce à sa rigidité en fléchissement résultant de ladite résistance en fléchissement, en dépit de l'influence des forces agissant sur la bande dans la zone de détection.
